# EUROPEAN PATENT APPLICATION

(11) **EP 4 841 094 A2**
(43) Date of publication of application: **18.11.2026**
(21) Application number: 26179188.3
(22) Date of filing: 18.05.2026
(51) Int. Cl.: F02K 5/00, F02C 7/18

(54) **COOLING AND/OR LUBRICATING ELECTRIC MACHINE SYSTEM FOR AIRCRAFT PROPULSION SYSTEM**

(30) Priority: 16.05.2025 US 202519210695
(71) Applicant: RTX Corporation, Farmington, CT 06032 (US)
(72) Inventor: YAZICI, Murat, Glastonbury, 06033 (US); CLARK, Thomas E., Wells, 04090 (US)
(74) Representative: Dehns

(57) **Abstract**

An aircraft propulsion system (20) includes a propulsor section (38), an engine core (44), a core flowpath (46), a bypass flowpath (48), a rotating structure (66A; 66B), an electric machine and a working fluid system. The engine core (44) is configured to power operation of the propulsor section (38). The rotating structure (66A; 66B) includes a bladed rotor (58; 59; 60; 61; 62) disposed in the propulsor section (38), the compressor section (39) or the turbine section (41). The electric machine system includes an electric machine operably coupled to the rotating structure (66A; 66B). The working fluid system is configured to service a component of the electric machine system. The working fluid system includes an air circuit and a heat exchanger. The air circuit extends through the heat exchanger from a circuit inlet to a circuit outlet. The circuit inlet is disposed in the bypass flowpath (48) next to a radial peripheral boundary of the bypass flowpath (48). The circuit inlet extends circumferentially about the axis (36) within the bypass flowpath (48).

## Description

### BACKGROUND OF THE DISCLOSURE

### 1. Technical Field

This disclosure relates generally to an aircraft propulsion system and, more particularly, to cooling and/or lubricating components of the aircraft propulsion system.

### 2. Background Information

An aircraft propulsion system includes various components which may utilize cooling and/or lubrication during aircraft propulsion system operation. Various cooling and/or lubrication systems and methods are known in the art. While these known cooling and/or lubrication systems and methods have various benefits, there is still room in the art for improvement.

### SUMMARY OF THE DISCLOSURE

According to an aspect of the present disclosure, a propulsion system is provided for an aircraft. This aircraft propulsion system includes a propulsor section, an engine core, a core flowpath, a bypass flowpath, a rotating structure, an electric machine and a working fluid system. The engine core is configured to power operation of the propulsor section. The engine core includes a compressor section, a combustor section and a turbine section. The core flowpath extends through the compressor section, the combustor section and the turbine section from a core inlet to a core exhaust. The core inlet is disposed downstream of the propulsor section and includes a core inlet area. The bypass flowpath extends outside of the engine core from a bypass inlet to a bypass outlet. The bypass inlet is disposed downstream of the propulsor section and includes a bypass inlet area that is greater than the core inlet area. The rotating structure is rotatable about an axis. The rotating structure includes a bladed rotor disposed in the propulsor section, the compressor section or the turbine section. The electric machine system includes an electric machine operably coupled to the rotating structure. The working fluid system is configured to service a component of the electric machine system. The working fluid system includes an air circuit and a heat exchanger. The air circuit extends through the heat exchanger from a circuit inlet to a circuit outlet. The circuit inlet is disposed in the bypass flowpath next to a radial peripheral boundary of the bypass flowpath. The circuit inlet extends circumferentially about the axis within the bypass flowpath.

According to another aspect of the present disclosure, a turbofan propulsion system is provided for an aircraft. This aircraft turbofan propulsion system includes a fan section, an engine core, a core flowpath, a bypass flowpath, a rotating structure, an electric machine, a working fluid circuit and a heat exchanger. The engine core is configured to power operation of the fan section. The engine core includes a compressor section, a combustor section and a turbine section. The core flowpath extends through the compressor section, the combustor section and the turbine section from a core inlet to a core exhaust. The core inlet is disposed downstream of the fan section. The bypass flowpath extends outside of the engine core from a bypass inlet to a bypass outlet. The bypass inlet is disposed downstream of the fan section. The rotating structure is rotatable about an axis. The rotating structure includes a bladed rotor disposed in the fan section, the compressor section or the turbine section. The electric machine system includes an electric machine operably coupled to the rotating structure. The working fluid circuit is configured to cool and/or lubricate a component of the electric machine system using a working fluid. The heat exchanger is disposed in the bypass flowpath. The heat exchanger extends at least fifteen degrees circumferentially about the axis within the bypass flowpath. The heat exchanger is configured to transfer heat energy between air from the bypass flowpath and the working fluid.

According to still another aspect of the present disclosure, an assembly is provided for an aircraft propulsion system. This assembly includes a rotating structure, an electric machine, a first working fluid system, an electric machine controller and a second working fluid system. The rotating structure is rotatable about an axis. The rotating structure includes a bladed compressor rotor and/or a bladed turbine rotor. The electric machine is operably coupled to the rotating structure. The electric machine is configurable as an electric motor and/or an electric generator. The first working fluid system is configured to cool and/or lubricate the electric machine using a first working fluid. The first working fluid system includes a first heat exchanger disposed in a flowpath at an inner peripheral boundary of the flowpath. The first heat exchanger extends circumferentially about the axis within the flowpath. The electric machine controller is electrically coupled to the electric machine. The electric machine controller is configured to control operation of the electric machine. The second working fluid system is configured to cool the electric machine controller using a second working fluid. The second working fluid system includes a second heat exchanger disposed in the flowpath at an outer peripheral boundary of the flowpath. The second heat exchanger extends circumferentially about the axis within the flowpath.

The aircraft propulsion system may be a turbofan propulsion system. The flowpath may be a bypass flowpath.

The circuit inlet may have an arcuate geometry.

The bypass inlet area may be greater than at least two times the core inlet area.

The propulsion system may also include a turbofan engine including the propulsor section and the engine core. The propulsor section may be configured as a fan section.

The circuit inlet may extend at least fifteen degrees circumferentially about the axis within the bypass flowpath.

The circuit inlet may extend at least forty-five degrees circumferentially about the axis within the bypass flowpath.

The bypass flowpath may have a radial flowpath height at a location of the circuit inlet. The circuit inlet may have a radial inlet height that is equal to or less than fifteen percent of the radial flowpath height.

The radial peripheral boundary of the bypass flowpath may be a radial outer peripheral boundary of the bypass flowpath.

The radial peripheral boundary of the bypass flowpath may be a radial inner peripheral boundary of the bypass flowpath.

The inner housing structure may include an inner flowpath wall, an inner nacelle structure and a bulkhead connected to the inner flowpath wall at an axial intersection between the inner flowpath wall and the inner nacelle structure. The inner flowpath wall may form an upstream portion of the radial inner peripheral boundary of the bypass flowpath. The inner nacelle structure may form a downstream portion of the radial inner peripheral boundary of the bypass flowpath. The circuit inlet may be axially aligned with the inner flowpath wall.

The inner nacelle structure may axially overlap the electric machine.

The propulsion system may also include a vane structure extending radially across the bypass flowpath. The vane structure may be arranged along the bypass flowpath between the bypass inlet and the circuit inlet.

The heat exchanger may project radially into the bypass flowpath and may form the circuit inlet.

The heat exchanger may be disposed outside of the bypass flowpath.

The electric machine may be configurable as an electric motor and/or an electric generator.

The component of the electric machine system may be configured as or otherwise include the electric machine.

The component of the electric machine system may be configured as or otherwise include an electric machine controller electrically coupled to and configured to control operation of the electric machine.

The heat exchanger may be or otherwise include an air-to-liquid heat exchanger.

The propulsion system may also include a housing structure forming the radial peripheral boundary of the bypass flowpath. The heat exchanger may be fixedly mounted to the housing structure.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system.
FIG. 2 is a schematic illustration of a portion of the aircraft propulsion system with an electric machine system and an electrical system.
FIG. 3 is a schematic illustration of a portion of the aircraft propulsion system with multiple working fluid systems.
FIG. 4 is a side sectional illustration of a portion of the aircraft propulsion system along a bypass flowpath arranged with multiple heat exchangers.
FIG. 5 is a cross-sectional illustration of a portion of the aircraft propulsion system at the heat exchangers.
FIG. 6 is a side sectional illustration of a portion of the aircraft propulsion system along the bypass flowpath arranged with another heat exchanger arrangement.

### DETAILED DESCRIPTION

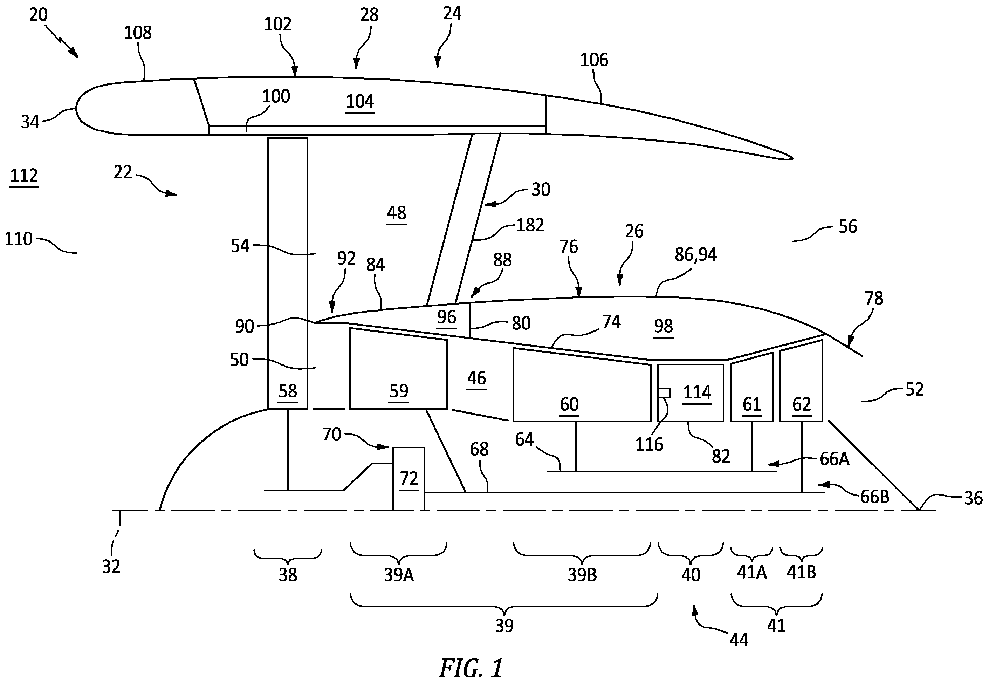

FIG. 1 illustrates a propulsion system 20 for an aircraft. The aircraft may be an airplane, a drone (e.g., an unmanned aerial vehicle (UAV)) or any other manned or unmanned aerial vehicle or system. For ease of description, the aircraft propulsion system 20 is described below as a turbofan propulsion system. The present disclosure, however, is not limited to such an exemplary aircraft propulsion system. The aircraft propulsion system 20, for example, may alternatively be configured as a turbojet propulsion system, a turboprop propulsion system, a turboshaft propulsion system, a propfan propulsion system, a pusher fan propulsion system, or any other type of ducted and/or open propulsor rotor propulsion system.

The aircraft propulsion system 20 includes a gas turbine engine 22 (e.g., a turbofan engine) housed within a stationary propulsion system housing 24. This propulsion system housing 24 of FIG. 1 includes an inner housing structure 26, an outer housing structure 28 and a guide vane structure 30 (e.g., a fan exit guide vane (FEGV) structure) extending radially between and connected to the inner housing structure 26 and the outer housing structure 28. The aircraft propulsion system 20 extends axially along an axis 32 of the aircraft propulsion system 20 between an axial upstream, forward end 34 of the aircraft propulsion system 20 and an axial downstream, aft end 36 of the aircraft propulsion system 20. Briefly, the propulsion system axis 32 may be a centerline axis of the aircraft propulsion system 20, the turbine engine 22 and/or one or more of its members. The propulsion system axis 32 may also or alternatively be a rotational axis for one or more members of the turbine engine 22.

The aircraft propulsion system 20 and its turbine engine 22 of FIG. 1 include a propulsor section 38 (e.g., a fan section), a compressor section 39, a combustor section 40 and a turbine section 41. The compressor section 39 of FIG. 1 includes a low pressure compressor (LPC) section 39A and a high pressure compressor (HPC) section 39B. The turbine section 41 of FIG. 1 includes a high pressure turbine (HPT) section 41A and a low pressure turbine (LPT) section 41B. At least (or only) the LPC section 39A, the HPC section 39B, the combustor section 40, the HPT section 41A and the LPT section 41B collectively form a core 44 (e.g., a gas generator) of the turbine engine 22. The aircraft propulsion system 20 and its turbine engine 22 of FIG. 1 also include a core flowpath 46 (e.g., an annular core flowpath) and a bypass flowpath 48 (e.g., an annular bypass flowpath). The core flowpath 46 extends sequentially through the LPC section 39A, the HPC section 39B, the combustor section 40, the HPT section 41A and the LPT section 41B from an airflow inlet 50 into the core flowpath 46 to a combustion products exhaust 52 out from the core flowpath 46. The bypass flowpath 48 extends through a bypass duct from an airflow inlet 54 into the bypass flowpath 48 to an airflow exhaust 56 from the bypass flowpath 48, where the bypass duct may be formed by the inner housing structure 26 and the outer housing structure 28. The bypass flowpath 48 and its bypass duct are configured to bypass (e.g., are disposed radially outboard of and extend along) the engine core 44 and the inner housing structure 26.

The propulsor section 38, the LPC section 39A, the HPC section 39B, the combustor section 40, the HPT section 41A and the LPT section 41B may be arranged sequentially along the propulsion system axis 32 within the propulsion system housing 24. The propulsor section 38 includes a bladed propulsor rotor 58; e.g., a fan rotor. The LPC section 39A includes a bladed low pressure compressor (LPC) rotor 59. The HPC section 39B includes a bladed high pressure compressor (HPC) rotor 60. The HPT section 41A includes a bladed high pressure turbine (HPT) rotor 61. The LPT section 41B includes a bladed low pressure turbine (LPT) rotor 62. Each of these engine rotors 58-62 includes a rotor base (e.g., a disk or a hub) and a plurality of rotor blades (e.g., airfoils, vanes, etc.). The rotor blades may be arranged into one or more stages axially along the respective engine rotor 58-62. The rotor blades in each stage are arranged and may be equispaced circumferentially around the respective rotor base in an annular array. Each of the rotor blades is connected to the respective rotor base. The rotor blades, for example, may be formed integral with or mechanically fastened, welded, brazed and/or otherwise attached to the respective rotor base. Each of the rotor blades projects spanwise (e.g., radially) out from the respective rotor base to a distal tip of the respective rotor blade.

The HPC rotor 60 is coupled to and rotatable with the HPT rotor 61. The HPC rotor 60 of FIG. 1, for example, is connected to the HPT rotor 61 through a high speed shaft 64. At least (or only) the HPC rotor 60, the HPT rotor 61 and the high speed shaft 64 collectively form a high speed rotating structure 66A; e.g., a high speed spool of the turbine engine 22 and its engine core 44. This high speed rotating structure 66A of FIG. 1 and its members 60, 61 and 64 are rotatable about the propulsion system axis 32. However, it is contemplated the high speed rotating structure 66A may alternatively be rotatable about another axis radially and/or angularly offset from the rotational axis of the propulsor rotor 58 and/or the centerline axis of the turbine engine 22.

The LPC rotor 59 is coupled to and rotatable with the LPT rotor 62. The LPC rotor 59 of FIG. 1, for example, is connected to the LPT rotor 62 through a low speed shaft 68. At least (or only) the LPC rotor 59, the LPT rotor 62 and the low speed shaft 68 collectively form a low speed rotating structure 66B; e.g., a low speed spool of the turbine engine 22 and its engine core 44. This low speed rotating structure 66B of FIG. 1 and its members 59, 62 and 68 are rotatable about the propulsion system axis 32. However, it is contemplated the low speed rotating structure 66B may alternatively be rotatable about another axis radially and/or angularly offset from the rotational axis of the propulsor rotor 58 and/or the centerline axis of the turbine engine 22.

The low speed rotating structure 66B is coupled to the propulsor rotor 58 through a rotating structure-to-propulsor (RSP) drivetrain 70. The RSP drivetrain 70 may be configured as a geared drivetrain, where a geartrain 72 (e.g., a transmission, a speed change device, an epicyclic geartrain, etc.) is disposed between and operatively couples the propulsor rotor 58 to the low speed rotating structure 66B and its LPT rotor 62. With this arrangement, the propulsor rotor 58 may rotate at a different (e.g., slower) rotational speed than the low speed rotating structure 66B and its LPT rotor 62. Here, the propulsor rotor 58 and the low speed rotating structure 66B may rotate in a common (the same) direction about the propulsion system axis 32 or in opposite directions about the propulsion system axis 32 depending, for example, upon the specific configuration of the geartrain 72. Alternatively, the RSP drivetrain 70 may be configured as a direct-drive drivetrain, where the geartrain 72 is omitted. With such an arrangement, the propulsor rotor 58 rotates at a common (the same) rotational speed as the low speed rotating structure 66B and its LPT rotor 62.

The inner housing structure 26 is configured to support the engine sections 38-41B and provide an aerodynamic cover over the engine core 44. This inner housing structure 26 is also configured to form a radial inner peripheral boundary of the bypass flowpath 48. The inner housing structure 26 of FIG. 1, for example, includes an inner case 74 (e.g., a core engine case) for the turbine engine 22 and its engine core 44, an inner wall structure 76, a core exhaust nozzle structure 78 and a bulkhead 80 (e.g., a firewall).

The inner case 74 is disposed radially outboard of the engine sections 39A-41B and, more particularly, the engine rotors 59-62 and a combustor 82 (e.g., an annular combustor) in the combustor section 40. The inner case 74 also extends axially along (e.g., axially overlaps) and extends circumferentially about (e.g., circumscribes) the engine sections 39A-41B and, more particularly, the engine rotors 59-62 and the combustor 82. The engine rotating structures 66A and 66B (generally referred to as "66") as well as the propulsor rotor 58 may be rotationally coupled to the inner case 74 through one or more internal support structures; e.g., frames. The combustor 82 and a stationary component of the geartrain 72 may be fixedly coupled to the inner case 74 through one or more internal support structures. The inner case 74 may thereby structurally support the engine core 44 as well as the propulsor rotor 58 and the RSP drivetrain 70.

The inner wall structure 76 is configured to provide the aerodynamic cover over the engine core 44 and its inner case 74. This inner wall structure 76 is also configured to form the inner peripheral boundary of the bypass flowpath 48. The inner wall structure 76 of FIG. 1, for example, includes an inner flowpath wall 84 (e.g., an outer casing of the inner housing structure 26) and an inner nacelle structure 86 (e.g., an inner fixed structure (IFS)). The inner flowpath wall 84 may form a radial inner platform for the guide vane structure 30. The inner flowpath wall 84 of FIG. 1, for example, projects axially in an upstream, forward direction from an axial intersection 88 with the inner nacelle structure 86 to a leading edge 90 of a splitter structure 92. Here, the intersection 88 of FIG. 1 is located at or near an axial downstream, aft end of the guide vane structure 30. In other embodiments, however, it is contemplated the intersection 88 may be located even further downstream of the vane structure aft end along the bypass flowpath 48. Referring again to FIG. 1, the inner flowpath wall 84 extends axially along and may circumscribe at least a forward section of the inner case 74. The leading edge 90 of the splitter structure 92 forms a radial outer peripheral boundary of the core inlet 50 and a radial inner peripheral boundary of the bypass inlet 54. An inner barrel 94 of the inner nacelle structure 86 of FIG. 1 extends axially in a downstream, aft direction from the intersection 88 to the core exhaust nozzle structure 78. The inner nacelle structure 86 extends axially along and circumferentially about an aft section of the inner case 74. A trailing edge of the core exhaust nozzle structure 78 forms a radial outer peripheral boundary of the core exhaust 52.

The bulkhead 80 projects radially out from the inner case 74 to the inner flowpath wall 84. The bulkhead 80 is also mechanically fastened and/or otherwise attached to the inner case 74 and the inner flowpath wall 84. The bulkhead 80 of FIG. 1, in particular, is attached to the inner flowpath wall 84 at the intersection 88. The bulkhead 80 extends circumferentially about (e.g., completely around) the inner case 74 and the propulsion system axis 32. This bulkhead 80 may be configured as a firewall or other barrier spatially and/or fluidly dividing a forward inner housing compartment 96 of the inner housing structure 26 from an aft inner housing compartment 98 (e.g., an engine core compartment) of the inner housing structure 26. The forward inner housing compartment 96 may be formed by and extend radially between the inner case 74 and the inner flowpath wall 84. This forward inner housing compartment 96 extends axially along the inner case 74 and the inner flowpath wall 84 in the downstream, aft direction to the bulkhead 80. The aft inner housing compartment 98 may be formed by and extend radially between the inner case 74 and the inner nacelle structure 86. This aft inner housing compartment 98 may also extend axially along the inner case 74 and the inner nacelle structure 86 in the upstream, forward direction to the bulkhead 80.

The outer housing structure 28 is configured to provide an aerodynamic cover over the propulsor section 38. The outer housing structure 28 is also configured to form a radial outer peripheral boundary of the bypass flowpath 48. The outer housing structure 28 of FIG. 1, for example, includes an outer case 100 (e.g., a fan engine case) for the turbine engine 22 and its propulsor section 38, an outer nacelle structure 102 and an outer housing compartment 104. The outer case 100 is disposed radially outboard of, extends axially along and may circumscribe the propulsor section 38 and its propulsor rotor 58. The outer case 100 may thereby house and may be configured as a containment structure for the propulsor section 38 and its propulsor rotor 58. An aft portion of the outer case 100 may also form a forward portion of the outer peripheral boundary of the bypass flowpath 48. The outer nacelle structure 102 is configured to provide an aerodynamic cover over the outer case 100. An aft structure 106 of the outer nacelle structure 102 (e.g., a thrust reverser structure) may form an aft portion of the outer peripheral boundary of the bypass flowpath 48. The outer housing compartment 104 may be formed by and extend radially between the outer case 100 and a cowl (e.g., a fan cowl) of the outer nacelle structure 102. This outer housing compartment 104 may also extend axially along the outer case 100 and the cowl between a forward structure 108 of the outer nacelle structure 102 (e.g., a nacelle inlet structure) and the aft structure 106 of the outer nacelle structure 102. Briefly, the forward structure 108 of the outer nacelle structure 102 projects axially upstream and forward of the outer case 100 to the propulsion system forward end 34, where the forward structure 108 of the outer nacelle structure 102 forms an airflow inlet 110 into the aircraft propulsion system 20.

During operation of the aircraft propulsion system 20 of FIG. 1, ambient air from an environment 112 external to the aircraft and its aircraft propulsion system 20 enters the aircraft propulsion system 20 and its turbine engine 22 through the propulsion system inlet 110. This air is propelled by the rotating propulsor rotor 58 in the aft direction towards the propulsion system aft end 36 and is split by the splitter structure 92 into an outer stream and an inner stream.

The outer stream of the air propelled by the rotating propulsor rotor 58 is directed into the bypass flowpath 48 through its bypass inlet 54. This air entering the bypass flowpath 48 may be referred to as "bypass air". The guide vane structure 30 conditions (e.g., straightens out, de-swirls, etc.) the flow of the bypass air within the bypass duct. This conditioned bypass air is subsequently directed out of the aircraft propulsion system 20 through the bypass exhaust 56 to provide forward thrust. This propulsion of the bypass air may account for a majority of the forward thrust generated by the aircraft propulsion system 20 and its turbine engine 22 of FIG. 1.

The inner stream of the air propelled by the rotating propulsor rotor 58 is directed into the core flowpath 46 through its core inlet 50. This air entering the core flowpath 46 may be referred to as "core air". This core air is compressed by the LPC rotor 59 and the HPC rotor 60 and is directed into a combustion chamber 114 (e.g., annular combustion chamber) of the combustor 82 in the combustor section 40. Fuel is injected into the combustion chamber 114 by one or more fuel injectors 116 and mixed with the compressed core air to provide a fuel-air mixture. This fuel-air mixture is ignited and combustion products thereof flow through and sequentially drive rotation of the HPT rotor 61 and the LPT rotor 62. The rotation of the HPT rotor 61 and the LPT rotor 62 respectively drive rotation of the HPC rotor 60 and the LPC rotor 59 and, thus, compression of the air received from the core inlet 50. The rotation of the LPT rotor 62 also drives rotation of the propulsor rotor 58 through the RSP drivetrain 70.

While the turbine engine 22 is described above with a particular two rotating structure arrangement (e.g., a two-spool architecture), the present disclosure is not limited thereto. For example, the LPC rotor 59 may be omitted to configure the LPT rotor 62 as a power turbine (PT) rotor for the propulsor rotor 58. The turbine engine 22 may also or alternatively include another rotating structure with a bladed compressor rotor in the compressor section 39 and a bladed turbine rotor in the turbine section 41; e.g., an intermediate speed spool for the engine core 44. Moreover, the aircraft propulsion system 20 of FIG. 1 is shown as a relatively high bypass turbofan propulsion system. An area of the bypass inlet 54, for example, is greater than an area of the core inlet 50. The bypass inlet area, for example, may be equal to or greater than two times (2x), three times (3x), four times (4x), five times (5x) or more the core inlet area. The aircraft propulsion system 20 of the present disclosure, however, is not limited to such an exemplary relatively high bypass turbofan propulsion system application.

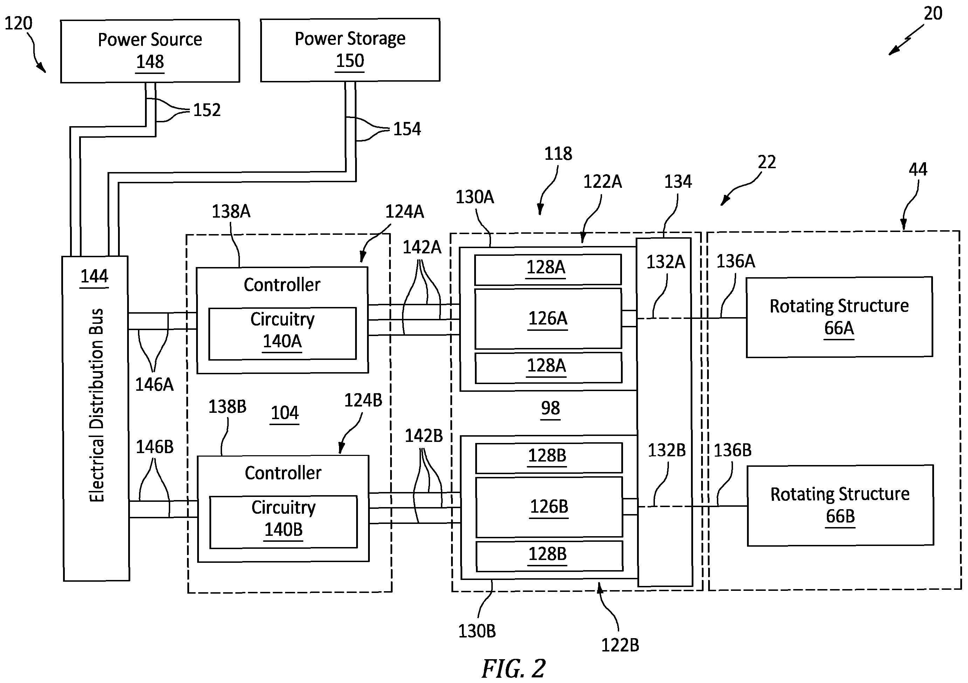

Referring to FIG. 2, the aircraft propulsion system 20 includes an electric machine system 118 electrically coupled to an electrical system 120 for the aircraft and its aircraft propulsion system 20. The electric machine system 118 of FIG. 2 includes one or more electric machines 122A and 122B (generally referred to as "122") and one or more electric machine (EM) controllers 124A and 124B (generally referred to as "124"). For ease of description, each electric machine 122 of FIG. 2 is described below as being electrically coupled to, controlled by and/or otherwise associated with a single, dedicated one of the EM controllers 124. However, it is contemplated a single EM controller may alternatively be electrically coupled to, may control and/or may otherwise be associated with multiple electric machines. It is also contemplated multiple EM controllers may be electrically coupled to, may control and/or may otherwise be associated with one or more common electric machines. Moreover, the electric machines 122 are shown in FIG. 2 as being arranged within the aft inner housing compartment 98. The EM controllers 124 are shown in FIG. 2 as being arranged within the outer housing compartment 104. However, it is contemplated one or more of these electric machine system members 122 and/or 124 may alternatively be located elsewhere within the aircraft propulsion system 20 depending on packaging constraints.

Each electric machine 122A, 122B of FIG. 2 includes an electric machine rotor 126A, 126B (generally referred to as "126"), an electric machine stator 128A, 128B (generally referred to as "128") and an electric machine housing 130A, 130B (generally referred to as "130"); e.g., a case. The machine rotor 126 is rotatable about a rotational axis of the machine rotor 126. The machine stator 128 is disposed next to and in electromagnetic communication with the machine rotor 126. The machine stator 128 of FIG. 2, in particular, is radially outboard of and circumscribes the machine rotor 126. With this arrangement, each electric machine 122 is configured as a radial flux electric machine. The electric machines 122 of the present disclosure, however, are not limited to such an exemplary rotor-stator configuration nor to radial flux arrangements. The machine rotor 126, for example, may alternatively be radially outboard of and circumscribe the machine stator 128. In another example, the machine rotor 126 may be axially next to the machine stator 128 configuring the respective electric machine 122 as an axial flux electric machine. Referring again to FIG. 2, the machine rotor 126 and the machine stator 128 are at least partially or completely housed within an interior of the machine housing 130.

Each electric machine 122 is operatively coupled to a respective one of the engine rotating structures 66. Each machine rotor 126A, 126B of FIG. 2, for example, is mechanically coupled to a respective gear system 132A, 132B (generally referred to as "132") of a gearbox 134; e.g., an accessory gearbox. Each gearbox gear system 132 is mechanically coupled to the respective engine rotating structure 66A, 66B through a respective drivetrain 136A, 136B (generally referred to as "136"); schematically shown. This drivetrain 136 may be configured as or otherwise include a shaft, a tower shaft assembly, another gearbox (e.g., an angle gearbox), and/or the like. For ease of description, each machine rotor 126 of FIG. 2 is described below as being coupled to and rotatable with a unique one of the engine rotating structures 66 of the aircraft propulsion system 20. However, it is contemplated multiple machine rotors may alternatively be coupled to and rotatable with a common engine rotating structure. It is also contemplated a single one of the machine rotors may be coupled to and rotatable with multiple engine rotating structures, directly or through another device such as a differential or a clutch system.

Each electric machine 122 of FIG. 2 may be configurable as an electric motor and/or an electric generator; e.g., an electric motor-generator. For example, during a motor mode of operation, a respective electric machine 122 may operate as the electric motor to convert electricity received from the aircraft electrical system 120. The machine stator 128, for example, may generate an electromagnetic field with the machine rotor 126 using a current of electricity received from the aircraft electrical system 120 through the respective EM controller 124. This electromagnetic field may drive rotation of the machine rotor 126. The machine rotor 126, in turn, may provide mechanical power to and drive rotation of the respective engine rotating structure 66 through the respective drivetrain 136. This mechanical power may be provided to boost power or completely power the rotation of the respective engine rotating structure 66. By contrast, during a generator mode of operation, the electric machine 122 may operate as the electric generator to convert mechanical power received from the respective engine rotating structure 66 into electricity. Rotation of the machine rotor 126, for example, may be rotationally driven by rotation of the respective engine rotating structure 66 through the respective drivetrain 136. The rotation of the machine rotor 126 may generate an electromagnetic field with the machine stator 128, and the machine stator 128 may convert energy from the electromagnetic field into electricity. The respective electric machine 122 may then provide a current of electricity to the aircraft electrical system 120 through the respective EM controller 124 for storage and/or further use. The electric machines 122 of the present disclosure, however, are not limited to such exemplary operation. For example, one, some or all of the electric machines 122 may alternatively each be configured as a dedicated electric generator; e.g., without the electric motor functionality. One, some or all of the electric machines 122 may alternatively each be configured as a dedicated electric motor; e.g., without the electric generator functionality.

Each EM controller 124A, 124B includes a controller housing 138A, 138B (generally referred to as "138") and internal controller circuitry 140A, 140B (generally referred to as "140"). The controller housing 138 may be configured as an enclosed case (e.g., a closed or sealed container) for the respective controller circuitry 140. The controller circuitry 140 is disposed within an interior of the controller housing 138; e.g., an internal chamber or other volume(s) within and enclosed by the controller housing 138. The controller circuitry 140 includes various electrical components, connectors and the like. Examples of the electrical components include, but are not limited to, printed circuit board(s) (PCB(s)), electrical inductor(s), electrical inverter(s), electrical amplifier(s), electrical switch(es) (e.g., contactor(s), relay(s), etc.), a processing device, memory, a communication module, electrical transformer(s), electrical rectifier(s), and/or the like.

Each EM controller 124A, 124B is electrically coupled to a respective one of the electric machines 122A, 122B through, for example, one or more electrical couplings 142A, 142B (generally referred to as "142"). The controller circuitry 140 of each EM controller 124 of FIG. 2, for example, is electrically coupled to the respective electric machine 122 and its machine stator 128 through the respective electric couplings 142. Similarly, each EM controller 124A, 124B is electrically coupled to an electrical distribution bus 144 of the aircraft electrical system 120 through, for example, one or more electric couplings 146A, 146B (generally referred to as "146"). The controller circuitry 140 of each EM controller 124 of FIG. 2, for example, is electrically coupled to the aircraft electrical system 120 and its electrical distribution bus 144 through the respective electric couplings 146. Examples of the electrical couplings 142 and 146 include, but are not limited to, high voltage electric cables, power feeder cables, power buses, and/or the like.

Each EM controller 124 and its controller circuitry 140 are configured to control operation of a respective one of the electric machines 122. For example, when operating as the electric motor, the respective EM controller 124 and its controller circuitry 140 are configured to regulate a flow of electricity from the aircraft electrical system 120 to the respective electric machine 122. This electricity flow regulation may include: (a) turning-on the flow of electricity from the aircraft electrical system 120 to the respective electric machine 122 (e.g., electrically coupling the respective electric machine 122 to the aircraft electrical system 120); (b) turning-off the flow of electricity from the aircraft electrical system 120 to the respective electric machine 122 (e.g., electrically decoupling the respective electric machine 122 from the aircraft electrical system 120); (c) moderating the flow of electricity from the aircraft electrical system 120 to the respective electric machine 122. Here, the respective EM controller 124 operates as a motor controller. In another example, when operating as the electric generator, the respective EM controller 124 and its controller circuitry 140 are configured to regulate a flow of electricity from the respective electric machine 122 to the aircraft electrical system 120. This electricity flow regulation may include: (a) turning-on the flow of electricity from the respective electric machine 122 to the aircraft electrical system 120 (e.g., electrically coupling the respective electric machine 122 to the aircraft electrical system 120); (b) turning-off the flow of electricity from the respective electric machine 122 to the aircraft electrical system 120 (e.g., electrically decoupling the respective electric machine 122 from the aircraft electrical system 120); (c) moderating the flow of electricity from the respective electric machine 122 to the aircraft electrical system 120. Here, the respective EM controller 124 operates as a generator controller.

The aircraft electrical system 120 includes the electrical distribution bus 144. This aircraft electrical system 120 may also include a power source 148 and/or a power storage 150. The electrical distribution bus 144 is electrically coupled to the electric machines 122 through their respective EM controllers 124 as described above. The electrical distribution bus 144 is also electrically coupled to the power source 148 and the power storage 150 through one or more respective electrical couplings 152 and 154; e.g., high voltage electric cables, power feeder cables, power buses, and/or the like. With this arrangement, the electrical distribution bus 144 provides an intermediate connection between the various electrical members 122A (via 124A), 122B (via 124B), 148 and/or 150. Moreover, it is contemplated the electrical distribution bus 144 may (or may not) also be electrically coupled to and provide the intermediate connection with one or more additional electric components of the aircraft propulsion system 20 and/or one or more additional electric components of the aircraft outside of the aircraft propulsion system 20. Examples of the additional electric components of the aircraft propulsion system 20 include, but are not limited to, sensors, actuators, pumps, valves, an electronic engine controller for the turbine engine 22, and/or the like. Examples of the additional electric components of the aircraft outside of the aircraft propulsion system 20 include, but are not limited to, electric devices mounted with an airframe of the aircraft.

The power source 148 is configured to generate electricity and provide that electricity to the electrical distribution bus 144. The power source 148, for example, may be configured as an electric generator powered by the turbine engine 22 (see FIG. 1). In another example, the power source 148 may be configured as an electric generator powered by another aircraft powerplant; e.g., an engine of a companion aircraft propulsion system, an engine of an auxiliary power unit (APU), a fuel cell system, and/or the like.

The power storage 150 is configured to receive electricity from the electrical distribution bus 144 and store that received electricity as potential energy. The power storage 150 is also configured to release the stored potential energy as electricity output into the electrical distribution bus 144. The power storage 150, for example, may be configured as or otherwise include a battery or an array of batteries (e.g., a battery pack). In another example, the power storage 150 may be configured as or otherwise include one or more capacitors; e.g., supercapacitors.

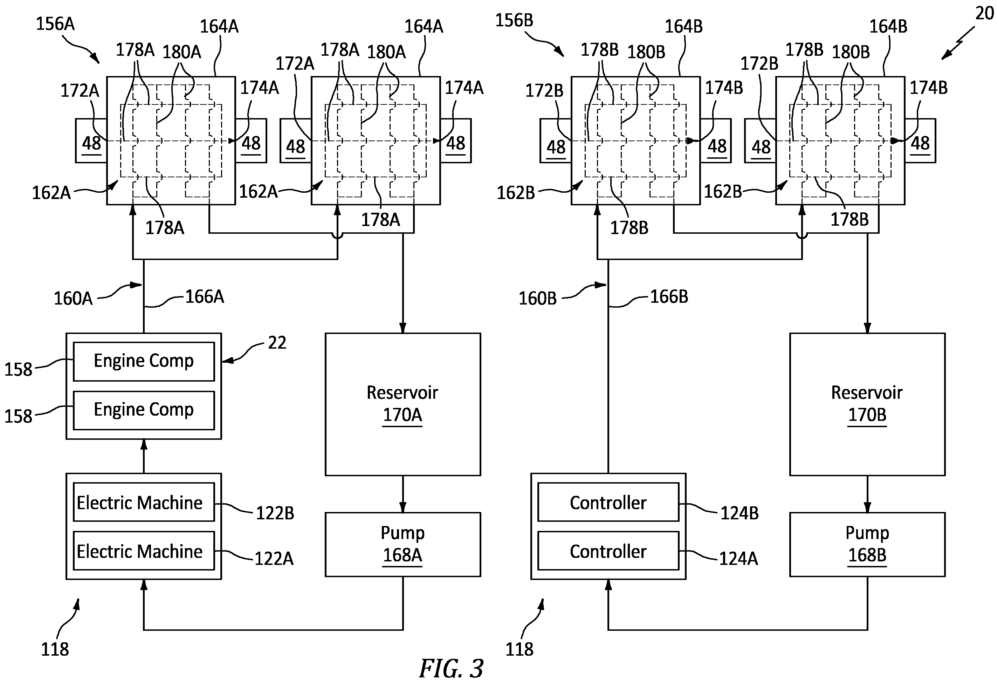

Referring to FIG. 3, the aircraft propulsion system 20 also includes one or more working fluid systems 156A and 156B (generally referred to as "156") for servicing at least (or only) the electric machine system 118. The first working fluid system 156A of FIG. 3, for example, is configured to lubricate and/or regulate a temperature of (e.g., cool) one or more of the electric machines 122. This first working fluid system 156A is also configured to lubricate and/or regulate a temperature of (e.g., cool) one or more internal components 158 of the turbine engine 22. Examples of these engine components 158 include, but are not limited to, bearing(s) supporting the engine rotating structure(s) 66 (see FIG. 1), bearing(s) supporting the RSP drivetrain 70 and its geartrain 72 (see FIG. 1), gear system(s) in the geartrain 72 (see FIG. 1), the gear system(s) 132 in the gearbox 134 (see FIG. 2), the drivetrain(s) 136 (see FIG. 2), seal assembly(ies), and/or the like. It is contemplated, however, the first working fluid system 156A may alternatively be dedicated to servicing the electric machines 122. The second working fluid system 156B of FIG. 3 is configured to regulate a temperature of (e.g., cool) and may be dedicated to one or more of the EM controllers 124. However, it is contemplated this second working fluid system 156B may alternatively also service (e.g., cool) one or more additional propulsion system components. Examples of these propulsion system components include, but are not limited to, an electronic controller such as an onboard engine controller (e.g., a FADEC), power electronics such as the electrical distribution bus 144 (see FIG. 2), and/or the like. Each of the working fluid systems 156A, 156B of FIG. 3 includes a working fluid circuit 160A, 160B (generally referred to as "160"), one or more air circuits 162A, 162B (generally referred to as "162") and one or more heat exchangers 164A, 164B (generally referred to as "164").

Each working fluid circuit 160A, 160B of FIG. 3 includes a fluid circuit path 166A, 166B (generally referred to as "166"). Each working fluid circuit 160A, 160B of FIG. 3 also includes the respective one or more heat exchangers 164A, 164B, a working fluid pump 168A, 168B (generally referred to as "168"), a working fluid reservoir 170A, 170B (generally referred to as "170"), where the fluid circuit components in each working fluid system 156A, 156B may be structurally and/or operationally independent from the like fluid circuit components in the other working fluid system 156B, 156A. The fluid circuit components 164, 170 and 168 of FIG. 3 are arranged inline along the respective fluid circuit path 166. Each fluid circuit path 166 of FIG. 3, for example, extends longitudinally through the respective fluid circuit components 164, 170 and 168 in a closed loop. Here, the heat exchangers 164 are fluidly coupled in parallel along the respective fluid circuit path 166. Each working fluid circuit 160 and its fluid circuit path 166 is also fluidly coupled to and/or otherwise arranged in thermal communication with the respective serviced propulsion system components (122 and 158, 124). The first working fluid circuit 160A and its first fluid circuit path 166A of FIG. 3, for example, may extend longitudinally (in series or in parallel) through and/or may otherwise be arranged in thermal communication with the electric machines 122 and the engine components 158. Similarly, the second working fluid circuit 160B and its second fluid circuit path 166B of FIG. 3 may extend longitudinally (in series or in parallel) though (e.g., integrated coolers of) and/or may otherwise be arranged in thermal communication with the EM controllers 124.

In each working fluid circuit 160 of FIG. 3, the working fluid pump 168, the serviced propulsion system components (122 and 158, 124) and the heat exchangers 164 are arranged serially along the fluid circuit path 166 between an outlet from the working fluid reservoir 170 and an inlet into the working fluid reservoir 170. The present disclosure, however, is not limited to such exemplary working fluid circuit arrangements. For example, in one or more of the working fluid circuits 160, the serviced propulsion system components (122 and 158, 124) and/or the working fluid pump 168 may alternatively be arranged between the heat exchangers 164 and the working fluid reservoir 170. In another example, in one or more of the working fluid circuits 160, the heat exchangers 164 may alternatively be fluidly coupled in series along the fluid circuit path 166. Moreover, it is contemplated each working fluid circuit 160 may (or may not) include various additional components arranged along its fluid circuit path 166 such as, but not limited to, filter(s), sensor(s), additional heat exchanger(s), additional propulsion system component(s), valve(s), pump(s), and/or the like.

Each air circuit 162 may be dedicated to a respective one of the heat exchangers 164. Each air circuit 162A, 162B of FIG. 3, for example, extends longitudinally through the respective heat exchanger 164A, 164B from an airflow inlet 172A, 172B (generally referred to as "172") into the respective air circuit 162A, 162B to an airflow outlet 174A, 174B (generally referred to as "174") out from the respective air circuit 162A, 162B. Each air circuit 162 and its members 172 and 174 may also be formed by a structure of the respective heat exchanger 164. Each circuit inlet 172 of FIG. 3, for example, may be formed by an inlet orifice (or multiple inlet orifices) into the respective heat exchanger 164. Each circuit outlet 174 of FIG. 3 may be formed by an outlet orifice (or multiple outlet orifices) out from the respective heat exchanger 164. The present disclosure, however, is not limited to such an exemplary arrangement as described below in further detail. Referring again to FIG. 3, each circuit inlet 172 is fluidly coupled to an air source and each circuit outlet 174 is fluidly coupled to an air sink. For ease of description, the air source and the air sink are described herein as a common volume internal to the aircraft propulsion system. More particularly, each air circuit 162 is described herein as being fluidly coupled to the bypass flowpath 48 (see FIG. 1) through its circuit inlet 172 and its circuit outlet 174. The present disclosure, however, is not limited to such an exemplary arrangement.

Each heat exchanger 164A, 164B of FIG. 3 includes one or more internal air passages 178A, 178B (generally referred to as "178") and one or more internal working fluid passages 180A, 180B (generally referred to as "180"). Each of these heat exchanger passages 178, 180 may be partially or completely formed by the respective heat exchanger 164. Each of the heat exchanger passages 178, 180 also extends within and/or through the respective heat exchanger 164. The air passages 178 in each heat exchanger 164 may (e.g., completely) form the respective air circuit 162 extending through that heat exchanger 164. The working fluid passages 180 in each heat exchanger 164 may form a section of the respective working fluid circuit 160 and its fluid circuit path 166 extending through that heat exchanger 164. Within each heat exchanger 164, the air passages 178 and the working fluid passages 180 may be arranged to configure that heat exchanger 164 as a crossflow heat exchanger, a counterflow heat exchanger, a parallel flow heat exchanger, or a hybrid heat exchanger with a combination crossflow, counterflow and/or parallel flow arrangement.

Each heat exchanger 164 of FIG. 3 is configured as an air-to-liquid heat exchanger. Each working fluid circuit 160 of FIG. 3, for example, is configured to circulate a liquid working fluid through its working fluid circuit 160. Examples of this working fluid include, but are not limited to, lubricant (e.g., oil) or coolant. Each working fluid system 156 may thereby be configured as a thermal management system (TMS) and/or a lubrication system for its serviced propulsion system components (122 and 158, 124). The present disclosure, however, is not limited to such exemplary working fluids. For example, where a respective one of the working fluid circuits (e.g., the first working fluid circuit 160A) is alternatively configured as an open loop and is in thermal communication with (e.g., does not extend through) its serviced propulsion system components (122 and 158), the working fluid may alternatively be fuel. The respective working fluid system (e.g., the first working fluid system 156A) may thereby be configured as a fuel system for the combustor section 40 and its fuel injectors 116 (see FIG. 1).

During operation of each working fluid system 156, the working fluid pump 168 directs (e.g., pumps) a relatively cool flow of the working fluid out of the working fluid reservoir 170, through the fluid circuit path 166, to the serviced propulsion system components (122 and 158, 124). At these serviced propulsion system components (122 and 158, 124), the working fluid may flow through the serviced propulsion system components (122 and 158, 124) and/or may flow through heat exchangers (e.g., cooling plates) for the serviced propulsion system components (122 and 158, 124). The working fluid circuit 160 thereby facilitates thermal communication between the working fluid in the fluid circuit path 166 and the serviced propulsion system components (122 and 158, 124). Heat energy generated by operation of the serviced propulsion system components (122 and 158, 124) may be transferred into the working fluid. This heat energy transfer may dissipate the heat energy in (e.g., cool) the serviced propulsion system components (122 and 158, 124) while also heating the working fluid. The working fluid may also lubricate one or more internal components within the serviced propulsion system components (122 and 158, 124) where the fluid circuit path 166 extends through those serviced propulsion system components (122 and 158, 124). The now heated working fluid is directed away from the serviced propulsion system components (122 and 158, 124), through the fluid circuit path 166, to the heat exchangers 164. Simultaneously, each air circuit 162 receives (e.g., bleeds) a relatively cool flow of bypass air from the bypass flowpath 48 through the circuit inlet 172, and directs that bleed air into the respective heat exchanger 164. Within each heat exchanger 164, at least some or all of the heat energy previously transferred into the working fluid from the serviced propulsion system components (122 and 158, 124) may be transferred out of the working fluid into the bleed air. This heat energy transfer may cool the working fluid while also heating the bleed air. The now cooled working fluid is directed from the heat exchangers 164, through the fluid circuit path 166, back into the working fluid reservoir 170 for subsequent recirculation. The now heated bleed air is directed back into the bypass flowpath 48 to facilitate, for example, thrust recapture.

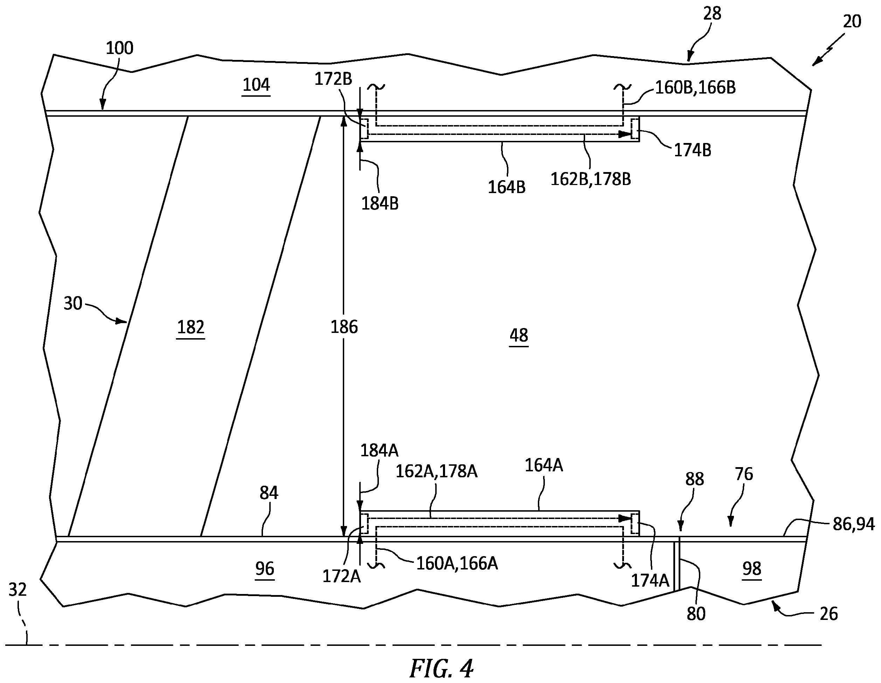

Referring to FIG. 4, each of the heat exchangers 164 and its associated circuit inlet 172 may be disposed in the bypass flowpath 48. One or more of the heat exchangers 164, for example, may each be disposed completely within the bypass flowpath 48. One or more of the heat exchangers 164 may alternatively each project partially radially into the bypass flowpath 48. Each first heat exchanger 164A of FIG. 4 and its associated first circuit inlet 172A, in particular, are disposed along the inner peripheral boundary of the bypass flowpath 48. Each first heat exchanger 164A, for example, may be arranged with and mounted to the inner flowpath wall 84. This first heat exchanger 164A and its associated first circuit inlet 172A may be located axially aft and downstream of the guide vane structure 30 and its array of guide vanes 182. With this arrangement, each first air circuit 162A is configured to direct inner boundary layer air along the inner peripheral boundary of the bypass flowpath 48 into the respective first heat exchanger 164A through its first circuit inlet 172A. Each second heat exchanger 164B of FIG. 4 and its associated second circuit inlet 172B are disposed along the outer peripheral boundary of the bypass flowpath 48. Each second heat exchanger 164B, for example, may be arranged with and mounted to the outer case 100 (or an inner panel of the outer nacelle structure 102; see FIG. 1). This second heat exchanger 164B and its associated second circuit inlet 172B may be located axially aft and downstream of the guide vane structure 30 and its array of the guide vanes 182. With this arrangement, each second air circuit 162B is configured to direct outer boundary layer air along the outer peripheral boundary of the bypass flowpath 48 into the respective second heat exchanger 164B through its second circuit inlet 172B. The working fluid systems 156 may thereby utilize bled bypass air (here, ram air) to facilitate cooling of the working fluids circulated in the working fluid circuits 160 while leaving a majority of the bypass air unobstructed for producing thrust.

Each heat exchanger 164A, 164B of FIG. 4 and its associated circuit inlet 172A, 172B has a radial height 184A, 184B (generally referred to as "184"). To reduce thrust efficiency losses, this radial height 184 may be sized equal to or less than fifteen percent (15%), ten percent (10%) or even five percent (5%) of a radial height 186 of the bypass flowpath 48 at that same location. The present disclosure, however, is not limited to such an exemplary arrangement. Additionally or in the alternative, the forwardmost section of the heat exchangers 164A, 164B may be shaped to reduce drag (e.g., angled), thereby further reducing efficiency losses.

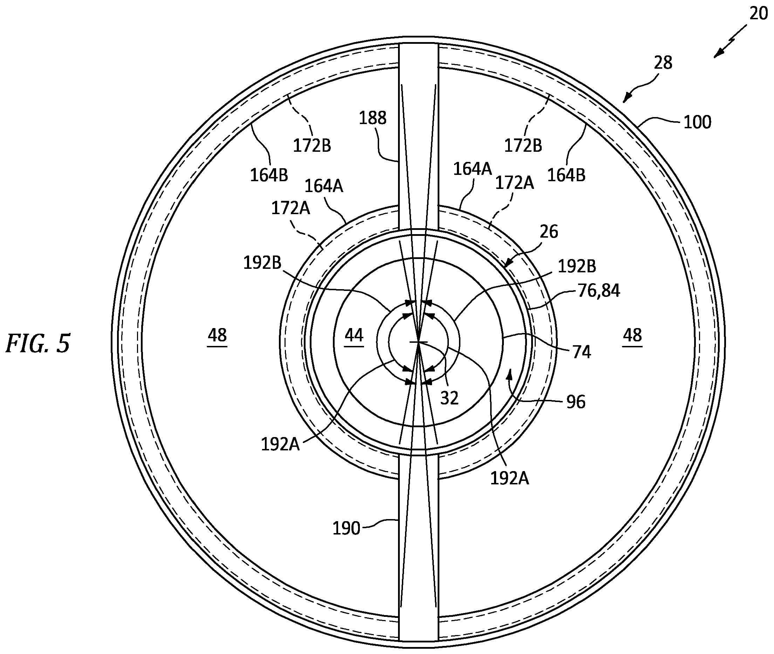

Referring to FIG. 5, each heat exchanger 164 and its associated circuit inlet 172 may have an arcuate and/or otherwise curved geometry when viewed in a lateral reference plane. This lateral reference plane (e.g., plane of FIG. 5) may be taken perpendicular to the propulsion system axis 32. Each heat exchanger 164A, 164B of FIG. 5 and its associated circuit inlet 172A, 172B, for example, extends circumferentially about the propulsion system axis 32 between opposing circumferential sides of the respective member 164, 172; e.g., respectively adjacent upper and lower bifurcation structures 188 and 190. These sides are circumferentially offset about the propulsion system axis 32 by a respective offset angle 192A, 192B (generally referred to as "192"). This offset angle 192 may be an acute angle, a right angle or an obtuse angle. More particularly, the offset angle 192 may be equal to or greater than fifteen degrees (15°), thirty degrees (30°), forty-five degrees (45°) or even ninety degrees (90°). The offset angle 192 may alternatively (or also) be equal to or less than one-hundred and eighty degrees (180°). The offset angle 192, for example, may be between twenty degrees (20°) and forty-five degrees (45°), between forty-five degrees (45°) and ninety degrees (90°), or between ninety degrees (90°) and one-hundred and seventy degrees (170°). With such arrangements, each respective set of the heat exchangers 164A, 164B may collectively circumferentially overlap between ten percent (10%) and ninety to ninety-five percent (90-95%) of the inner housing structure 26. Each heat exchanger 164A, 164B may circumferentially overlap between five percent (5%) and forty-five to fifty percent (45-50%) of the inner housing structure 26. Note, while the offset angles 192 are shown in FIG. 5 as being substantially equal, it is contemplated one or more of the offset angles 192 may be different from another one or more of the offset angles 192.

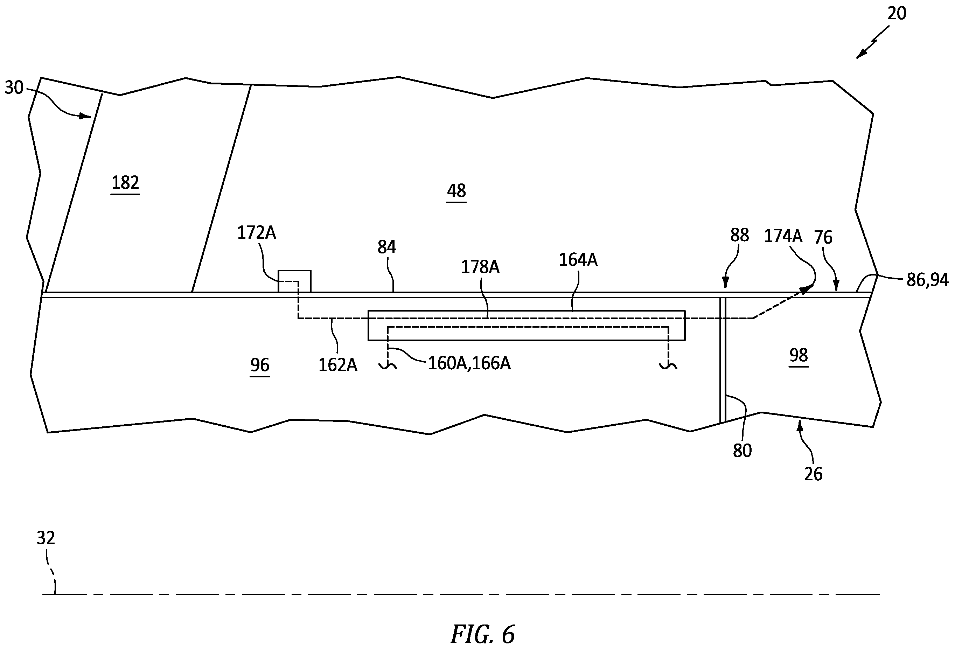

In some embodiments, referring to FIGS. 4 and 5, each heat exchanger 164A, 164B and its associated circuit inlet 172A, 172B may be disposed in the bypass flowpath 48. With such an arrangement, a longitudinal length of each air circuit 162 may be reduced (e.g., minimized) and no additional space within the housing structures 26 and 28 is needed for the heat exchangers 164. However, where additional space is available in the inner housing structure 26 and/or the outer housing structure 28, it is contemplated one or more of the heat exchangers 164A, 164B may alternatively be arranged outside of the bypass flowpath 48. For example, referring to FIG. 6, one or more of the first heat exchangers 164A may be disposed within the forward inner housing compartment 96. With such an arrangement, each first air circuit 162A radially crosses the inner wall structure 76 and its inner flowpath wall 84 from its first circuit inlet 172A to the respective first heat exchanger 164A, and then radially crosses the inner wall structure 76 and its inner barrel 94 (or the inner flowpath wall 84 again) from the respective first heat exchanger 164A to its first circuit outlet 174A. Of course, a similar arrangement may also be provided for one or more of the second heat exchangers 164B with respect to the outer housing structure 28.

In some embodiments, referring to FIG. 5, a single heat exchanger 164A, 164B extends circumferentially about the propulsion system axis 32 to common sides of the bifurcation structures 188 and 190. In other embodiments, one or more of the heat exchangers 164A, 164B of FIG. 5 may be divided into two or more arcuate heat exchangers sections to facilitate installation and/or service.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A propulsion system (20) for an aircraft, comprising:
a propulsor section (38);
an engine core (44) configured to power operation of the propulsor section (38), the engine core (44) including a compressor section (39), a combustor section (40) and a turbine section (41);
a core flowpath (46) extending through the compressor section (39), the combustor section (40) and the turbine section (41) from a core inlet (50) to a core exhaust (52), the core inlet (50) disposed downstream of the propulsor section (38) and comprising a core inlet area;
a bypass flowpath (48) extending outside of the engine core (44) from a bypass inlet (54) to a bypass outlet (56), the bypass inlet (54) disposed downstream of the propulsor section (38) and comprising a bypass inlet area that is greater than the core inlet area;
a rotating structure (66A; 66B) rotatable about an axis (36), the rotating structure (66A; 66B) comprising a bladed rotor (58; 59; 60; 61; 62) disposed in the propulsor section (38), the compressor section (39) or the turbine section (41);
an electric machine system (118) comprising an electric machine (122A; 122B) operably coupled to the rotating structure (66A; 66B); and
a working fluid system (156A; 156B) configured to service a component (122A; 122B; 124A; 124B) of the electric machine system (118), the working fluid system (156A; 156B) including an air circuit (162A; 162B) and a heat exchanger (164A; 164B), the air circuit (162A; 162B) extending through the heat exchanger (164A; 164B) from a circuit inlet (172A; 172B) to a circuit outlet (174A; 174B), the circuit inlet (172A; 172B) disposed in the bypass flowpath (48) next to a radial peripheral boundary of the bypass flowpath (48), and the circuit inlet (172A; 172B) extending circumferentially about the axis (36) within the bypass flowpath (48).

2. The propulsion system of claim 1, further comprising:
a turbofan engine (22) including the propulsor section (38) and the engine core (44);
the propulsor section (38) configured as a fan section (38).

3. The propulsion system of claim 1 or 2, wherein the circuit inlet (172A; 172B) extends at least fifteen degrees circumferentially about the axis (36) within the bypass flowpath (48), optionally wherein the circuit inlet (172A; 172B) extends at least forty-five degrees circumferentially about the axis (36) within the bypass flowpath (48).

4. The propulsion system of any preceding claim, wherein:
the bypass flowpath (48) has a radial flowpath height (186) at a location of the circuit inlet (172A; 172B); and
the circuit inlet (17A; 172B) has a radial inlet height (184A; 184B) that is equal to or less than fifteen percent of the radial flowpath height (186).

5. The propulsion system of any preceding claim, wherein the radial peripheral boundary of the bypass flowpath (48) is a radial outer peripheral boundary of the bypass flowpath (48).

6. The propulsion system of any of claims 1 to 4, wherein the radial peripheral boundary of the bypass flowpath (48) is a radial inner peripheral boundary of the bypass flowpath (48).

7. The propulsion system of claim 6, further comprising:
an inner housing structure (26) comprising an inner flowpath wall (84), an inner nacelle structure (86) and a bulkhead (80) connected to the inner flowpath wall (84) at an axial intersection (88) between the inner flowpath wall (84) and the inner nacelle structure (86);
the inner flowpath wall (84) forming an upstream portion of the radial inner peripheral boundary of the bypass flowpath (48);
the inner nacelle structure (86) forming a downstream portion of the radial inner peripheral boundary of the bypass flowpath (48); and
the circuit inlet (172A; 172B) axially aligned with the inner flowpath wall (84),
optionally wherein the inner nacelle structure (86) axially overlaps the electric machine (122A; 122B).

8. The propulsion system of any preceding claim, further comprising:
a vane structure (30) extending radially across the bypass flowpath (48);
the vane structure (30) arranged along the bypass flowpath (48) between the bypass inlet (54) and the circuit inlet (172A; 172B).

9. The propulsion system of any preceding claim, wherein the heat exchanger (164A; 164B) projects radially into the bypass flowpath (48) and forms the circuit inlet (172A; 172B); or wherein the heat exchanger (164A; 164B) is disposed outside of the bypass flowpath (48).

10. The propulsion system of any preceding claim, wherein the electric machine (122A; 122B) is configurable as an electric motor and/or an electric generator.

11. The propulsion system of any preceding claim, wherein the component (122A; 122B) of the electric machine system (118) comprises the electric machine (122A; 122B); or wherein the component (124A; 124B) of the electric machine system (118) comprises an electric machine controller (124A: 124B) electrically coupled to and configured to control operation of the electric machine (122A; 122B).

12. The propulsion system of any preceding claim, wherein the heat exchanger (164A; 164B) comprises an air-to-liquid heat exchanger (164A; 164B).

13. The propulsion system of any preceding claim, further comprising a housing structure (26; 28) forming the radial peripheral boundary of the bypass flowpath (48), the heat exchanger (164A; 164B) fixedly mounted to the housing structure (28).

14. A turbofan propulsion system (20) for an aircraft, comprising:
a fan section (38);
an engine core (44) configured to power operation of the fan section (38), the engine core (44) including a compressor section (39), a combustor section (40) and a turbine section (41);
a core flowpath (46) extending through the compressor section (39), the combustor section (40) and the turbine section (41) from a core inlet (50) to a core exhaust (52), the core inlet (50) disposed downstream of the fan section (38);
a bypass flowpath (48) extending outside of the engine core (44) from a bypass inlet (54) to a bypass outlet (56), the bypass inlet (54) disposed downstream of the fan section (38);
a rotating structure (66A; 66B) rotatable about an axis (36), the rotating structure (66A; 66B) comprising a bladed rotor (58; 59; 60; 61; 62) disposed in the fan section (38), the compressor section (39) or the turbine section (41);
an electric machine system (118) comprising an electric machine (122A; 122B) operably coupled to the rotating structure (66A; 66B);
a working fluid circuit (160A; 160B) configured to cool and/or lubricate a component (122A; 22B; 124A; 124B) of the electric machine system (118) using a working fluid; and
a heat exchanger (164A; 164B) disposed in the bypass flowpath (48), the heat exchanger (164A; 164B) extending at least fifteen degrees circumferentially about the axis (36) within the bypass flowpath (48), and the heat exchanger (164A; 164B) configured to transfer heat energy between air from the bypass flowpath (48) and the working fluid.

15. An assembly for an aircraft propulsion system (20), comprising:
a rotating structure (66A; 66B) rotatable about an axis (36), the rotating structure (66A; 66B) comprising a bladed compressor rotor (59; 60) and/or a bladed turbine rotor (61; 62);
an electric machine (122A; 122B) operably coupled to the rotating structure (66A; 66B), the electric machine (122A; 122B) configurable as an electric motor and/or an electric generator;
a first working fluid system (156A) configured to cool and/or lubricate the electric machine (122A; 122B) using a first working fluid, the first working fluid system (156A) comprising a first heat exchanger (164A) disposed in a flowpath (48) at an inner peripheral boundary of the flowpath (48), and the first heat exchanger (164A) extending circumferentially about the axis (36) within the flowpath (48);
an electric machine controller (124A: 124B) electrically coupled to the electric machine (122A: 122B), the electric machine controller (124A; 124B) configured to control operation of the electric machine (122A; 122B); and
a second working fluid system (156B) configured to cool the electric machine controller (124A; 124B) using a second working fluid, the second working fluid system comprising a second heat exchanger (164B) disposed in the flowpath (48) at an outer peripheral boundary of the flowpath (48), and the second heat exchanger (164B) extending circumferentially about the axis (36) within the flowpath (48), optionally wherein the aircraft propulsion system (20) is a turbofan propulsion system (20), and the flowpath (48) is a bypass flowpath (48).
